# EUROPÄISCHE PATENTSCHRIFT

(11) **EP 3 067 257 B1**
(45) Veröffentlichungstag und Bekanntmachung des Hinweises auf die Patenterteilung: **02.01.2019**
(21) Anmeldenummer: 16159175.5
(22) Anmeldetag: 08.03.2016
(51) Int. Cl.: B62D 55/06, B62D 55/08

(54) **VORRICHTUNG UND VERFAHREN ZUR BESTIMMUNG DER BODENDRUCKVERTEILUNG BEI EINER MOBILEN ARBEITSMASCHINE**
DEVICE AND METHOD FOR DETERMINING THE GROUND PRESSURE DISTRIBUTION IN A MOBILE WORK DEVICE
DISPOSITIF ET PROCEDE DE DETERMINATION DE LA REPARTITION DE LA PRESSION AU SOL POUR UNE MACHINE DE TRAVAIL MOBILE

(30) Priorität: 11.03.2015 DE 102015103556
(43) Veröffentlichungstag der Anmeldung: 14.09.2016
(73) Patentinhaber: Manitowoc Crane Group France SAS, 69574 Dardilly Cedex (FR)
(72) Erfinder: BACKES, Bernd, 66649 Oberthal (DE)
(74) Vertreter: Rau, Schneck & Hübner Patentanwälte Rechtsanwälte PartGmbB

(56) Entgegenhaltungen:
- EP-A1- 1 995 159
- EP-A1- 2 977 300
- US-A1- 2011 174 555

## Beschreibung

Die vorliegende Erfindung betrifft ein Kettenlaufwerk für eine mobile Arbeitsmaschine, wie etwa einen Raupenkran oder einen Raupenbagger, das eine Messsensorik zur Bestimmung der über das Kettenlaufwerk in den Boden eingeleiteten Kräfte aufweist. Die Erfindung betrifft ferner ein Verfahren zur Bestimmung der Bodendruckverteilung und eine ein solches Verfahren durchführende Arbeitsmaschinensteuerung. Ferner betrifft die Erfindung eine Arbeitsmaschine mit einem entsprechenden Kettenlaufwerk und eine entsprechende Arbeitsmaschinensteuerung.

Um mobile Arbeitsmaschinen wie etwa Raupenkrane oder Raupenbagger sicher einsetzen zu können, muss der für den Maschineneinsatz zulässige Bodendruck ermittelt werden, also der Druck, dem der Boden unter der Maschine noch standhält. Oftmals muss der zulässige Bodendruck abgeschätzt werden, wobei auch in entsprechenden Tabellen angegebene Werte für den zulässigen Bodendruck nur als grobe Richtwerte dienen können. Zusätzlich sind Kenntnisse darüber erforderlich, welchen Druck die Maschine tatsächlich auf den unter ihr befindlichen Boden ausübt, um das Überschreiten des zulässigen Bodendrucks zu verhindern.

Bei Mobilkranen behalf man sich etwa mit einer Messung der vom Kran aufgenommenen Last, die eine Abschätzung des verursachten Bodendrucks zulässt, wobei die so gewonnenen Daten einer Arbeitsmaschinensteuerung zugeführt werden, die Kranfunktionen sperrt, welche ein Überschreiten des zulässigen Bodendrucks bewirken würden. Trotz dieser Sicherheitsmaßnahmen traten in der Vergangenheit Schadensfälle auf, welche auf eine Überschreitung des zulässigen Bodendrucks zurückzuführen waren.

Aus der DE 20 2010 001 192 U1 ist ein Raupenfahrwerk bekannt, bei dem im vorderen und hinteren Bereich des Raupenträgers jeweils ein Mittel zum Verstellen der Auflagefläche des Raupenträgers vorgesehen ist und wobei wenigstens ein Kraftmesssystem zur Kraftmessung der im Bereich der Mittel anliegenden Kräfte vorgesehen ist.

Aus der DE 37 11 239 C2 ist eine Einrichtung zur Sicherung von verfahrbaren Raupentransportern gegen Kippen beim Beladen und/oder Verfahren der Last bekannt, wobei ein Grundrahmen über hydraulische oder pneumatische Zylinderkolbenaggregate mit dem Fahrwerk verbunden ist und an die Arbeitsräume der Zylinderkolbenaggregate Druckmesseinrichtungen angeschlossen sind.

Weitere Raupenfahrzeuge sind bekannt aus EP 2 977 300 A1 und US 2011/174555 A1.

Es ist eine Aufgabe der vorliegenden Erfindung, die Sicherheit beim Einsatz von mobilen Arbeitsmaschinen zu erhöhen.

Diese Aufgabe wird durch den Gegenstand der unabhängigen Patentansprüche 1 und 6 gelöst.

Gemäß der vorliegenden Erfindung wird zumindest ein Kettenlaufwerk für eine Arbeitsmaschine, insbesondere für einen Raupenkran oder einen Raupenbagger bereitgestellt, das einen Raupenträger, eine Raupenkette, ein Trieb- und ein Leitrad, und eine Anordnung von mit dem Raupenträger gekoppelten Laufrädern umfasst, wobei das Kettenlaufwerk ferner eine Messsensorik aufweist, welche für die äußeren, sich an das Triebrad und das Leitrad anschließenden Laufräder und zumindest ein weiteres, zwischen den äußeren Laufrädern angeordnetes Laufrad jeweils einen Sensor umfasst, mittels dem die über das jeweilige Laufrad in die Raupenkette eingeleitete Kraft bestimmt werden kann.

Beim erfindungsgemäßen Kettenlaufwerk werden also bei zumindest drei Laufrädern mittels einer Messsensorik also gerade die Kräfte gemessen, die aktuell über die jeweiligen Laufräder in die Raupenkette, und folglich über die Raupenkette in den Boden eingeleitet werden. In Kenntnis der Geometrie der Raupenkette, also der zur Einleitung der Kraft in den Boden zur Verfügung stehenden Auflagefläche kann so auf die aktuell vorherrschende Bodendruckverteilung geschlossen werden.

Zur Messung der über das jeweilige Laufrad und die Raupenkette in den Boden eingeleiteten Druckkräfte sind jedwede hierfür geeignete Sensoren denkbar, wie etwa Sensoren, welche eine Biegebeanspruchung, eine Torsionsbeanspruchung, eine Beanspruchung auf Zug oder eine Beanspruchung auf Druck der mit den Sensoren versehenen Bauteile erfassen. Die Messsensorik des erfindungsgemäßen Kettenlaufwerks weist also zumindest einen Sensor in einem von zumindest einer Laufrolle belasteten Bauteil des Kettenlaufwerks auf. Es können demnach Teile der Raupenkette mit Sensoren ausgestattet sein. Zusätzlich oder alternativ ist es auch möglich, Sensoren für Bauteile des Kettenlaufwerks vorzusehen, welche sich an einer beliebigen Stelle im Kraftverlauf zwischen den Verbolzungsstellen des Kettenlaufwerks zum Raupenmittelstück und den Laufrädern befinden. Wie bereits erwähnt kann gemäß der vorliegenden Erfindung jede Art von Sensor eingesetzt werden, die dazu geeignet ist, auf die in den Boden eingeleiteten Druckkräfte rückzuschließen. So können etwa, für geeignete druckbelastete Bauteile ein oder mehrere Drucksensoren vorgesehen werden. Analog können allerdings auch geeignete auf Zug, auf Biegung oder Torsion beanspruchte Bauteile mit Sensoren ausgestattet werden, welche die entsprechenden Zug-, Biege- oder Torsionsbeanspruchungen messen.

Über die Messung der durch den Kran und die aufgenommene Last verursachten und über die zumindest eine Laufrolle vermittelten Belastung des Bauteils kann sogleich auf die Druckkraft geschlossen werden, die von der jeweiligen Laufrolle über die Raupenkette in den Boden eingeleitet wird.

Ferner ist es möglich, dass nicht nur für drei oder mehr Laufräder eines Kettenlaufwerks die jeweils über die einzelnen Laufräder übermittelten Kräfte erfasst werden, sondern für sämtliche Laufräder bzw. für die gesamte Laufräderanordnung des Kettenlaufwerks. Mit zunehmender Anzahl an durch Sensoren überwachte Laufräder nimmt auch die Genauigkeit der Bestimmung der Bodendruckverteilung zu. So muss diese nicht etwa über die Bereiche mit Laufrädern hinweg interpoliert werden, für welche kein Messsensor vorgesehen ist.

Bei der vorliegenden Erfindung können mehrere Laufräder mittels zumindest eines Sensors gemeinsam überwacht werden. So könnten beispielsweise mehrere Laufräder zu Gruppen zusammengefasst werden, wobei die über die jeweiligen Gruppen in die Raupenkette eingeleitete Kraft mittels zumindest einem Sensor bestimmt wird.

Im Rahmen der vorliegenden Erfindung ist es ebenfalls möglich für jedes Laufrad zumindest einen eigenen Sensor vorzusehen, mittels dem die über das jeweilige Laufrad in die Raupenkette eingeleitete Kraft erfasst wird. Da einzelne Sensoren voneinander unabhängige Messwerte liefern, ist so eine sehr genaue Bestimmung der Bodendruckverteilung über die Laufradanordnung des Kettenlaufwerks hinweg möglich.

Ferner sei darauf hinzuweisen, dass mittels der vorliegenden Erfindung nicht nur eine direkte Bestimmung der tatsächlich vorliegenden Bodendruckverteilung möglich ist, sondern auch eine zeitechte Messung der aktuell vorliegenden Bodendruckverteilung.

Gemäß der Erfindung kann hierbei ein oberhalb der jeweiligen Laufrad-Achse in den Laufwerkskasten des Laufwerksträgers integrierter Sensor, insbesondere ein Drucksensor vorgesehen sein. Dieser Sensor kann insbesondere an der jeweiligen Laufrad-Achse anliegen, bzw. an diese angrenzen.

Auch können für jedes Laufrad mehrere Sensoren, insbesondere Drucksensoren vorgesehen sein. So kann etwa jeweils ein Sensor zu beiden Seiten der Laufrad-Achse im Laufwerkkasten integriert sein.

Ein weiterer Aspekt der vorliegenden Erfindung betrifft ein Verfahren zur Bestimmung der Bodendruckverteilung unterhalb einer Arbeitsmaschine, insbesondere eines Raupenkrans oder Raupenbaggers, die zumindest ein Kettenlaufwerk mit einem Raupenträger, einer Raupenkette, einem Trieb- und einem Leitrad, und einer Anordnung von mit dem Raupenträger gekoppelten Laufrädern aufweist, wobei das Kettenlaufwerk eine Messsensorik aufweist, welche für die äußeren, sich an das Triebrad und das Leitrad anschließenden Laufräder und zumindest ein weiteres, zwischen den äußeren Laufrädern angeordnetes Laufrad jeweils einen Sensor umfasst, mit den Schritten: Bestimmen der in die Raupenkette eingeleiteten Kräfte für die Laufräder mittels der jeweiligen Sensoren; Bestimmen der Bodendruckverteilung für zumindest ein Kettenlaufwerk der Arbeitsmaschine aus den ermittelten Kräften.

Das erfindungsgemäße Verfahren kann ein Kettenlaufwerk einbinden, wie es voranstehend beschrieben wurde. Zur Bestimmung des Bodendrucks ist neben der Kräftemessung die Auflagefläche, also die vorgegebene Geometrie des Kettenlaufwerks notwendig. Aufgrund der durch das erfindungsgemäße Verfahren gewonnenen Kenntnis über den aktuellen Bodendruck/die aktuelle Bodendruckverteilung lässt sich eine Lastmomentbegrenzung realisieren, die nach gesetzlicher Vorschrift neben einer andersartigen Lastmomentbegrenzung bei einem Kran eingesetzt werden kann. So kann das erfindungsgemäße Verfahren weiterhin zumindest einen weiteren Schritt umfassen, der das Unterdrücken von Kranfunktionen vorsieht, die ein Überschreiten eines maximal zulässigen Bodendrucks bewirken würden.

Sämtliche Schritte des erfindungsgemäßen Verfahrens können von einem Computer durchgeführt werden, der einen Teil einer Arbeitsmaschinensteuerung bildet.

Ein weiterer Aspekt der vorliegenden Erfindung betrifft eine Arbeitsmaschine, insbesondere einen Raupenkran oder Raupenbagger, mit zumindest einem wie oben beschriebenen Kettenlaufwerk und/oder einer wie oben beschriebenen Arbeitsmaschinensteuerung.

Im Folgenden werden bevorzugte Ausführungsformen der vorliegenden Erfindung anhand der beiliegenden Zeichnungen erläutert. Die Erfindung kann die hierin offenbarten Merkmale einzeln sowie in jedweder sinnvollen Kombination umfassen. Es zeigen:
- Figur 1: eine perspektivische Ansicht einer Ausführungsform des Kettenlaufwerks gemäß der vorliegenden Erfindung;
- Figur 2: eine vergrößerte Ansicht des Kettenlaufwerks nach Fig. 1 im Bereich einer Laufradachse; und
- Figur 3: eine Seitenansicht und einen Querschnitt durch das Kettenlaufwerk nach Fig. 1.

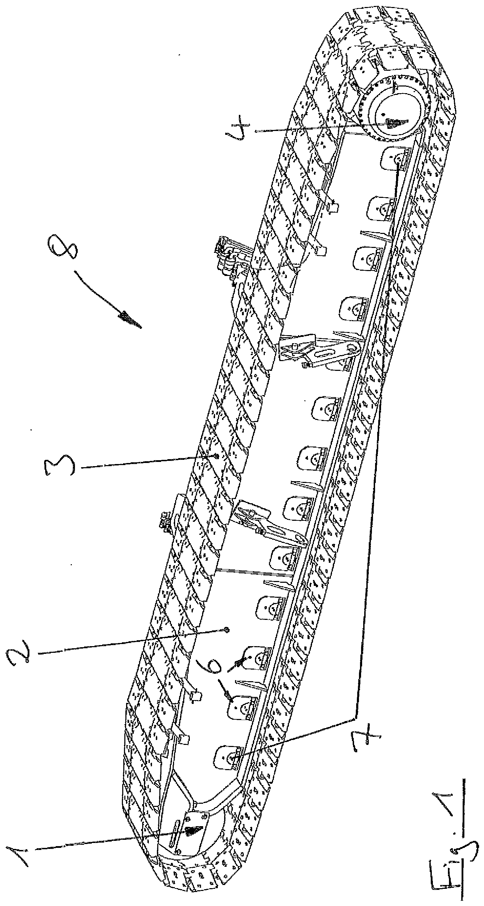

Wie in den Figuren 1 bis 3 zu sehen ist, weist die gezeigte Ausführungsform des erfindungsgemäßen Kettenlaufwerks 8 mehrere Laufräder 5 (in der Figur 1 nicht zu sehen) auf, die sich jeweils um eine eigene Laufrad-Achse 7 drehen. Am hinteren, in der Figur 1 rechts gezeigten Ende des Kettenlaufwerks 8 befindet sich das Antriebsrad 4, während sich am vorderen, in der Figur 1 links gezeigten Ende des Kettenlaufwerks 8 das Leitrad 1 befindet. Die mehrgliedrige Raupenkette 3 läuft um den Raupenträger 2 und wird vom Antriebsrad 4 angetrieben. Sowohl die Gewichtskraft der Arbeitsmaschine als auch die Gewichtkraft der von der Arbeitsmaschine aufgenommenen Last wird über den Raupenträger 2, die Laufradachsen 7, die Laufräder 5 und die Raupenkette 3 in den sich unterhalb der Raupenkette 3 befindlichen Boden eingeleitet.

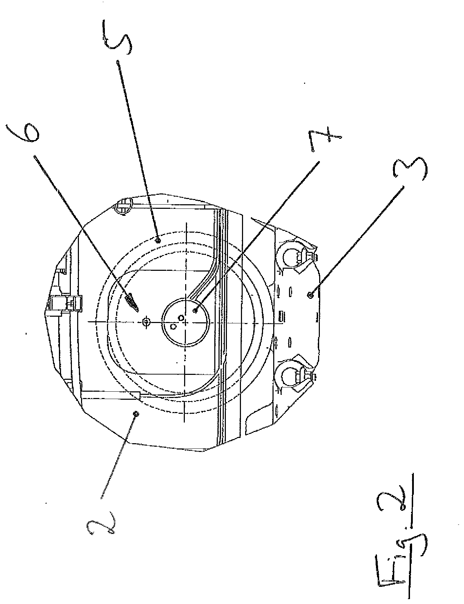

Wie in den Figuren 1 und 2 zu sehen ist, befindet sich zentral oberhalb jeder der Laufradachsen 7 ein Drucksensor 6 in einer entsprechenden Bohrung im Raupenträger 2.

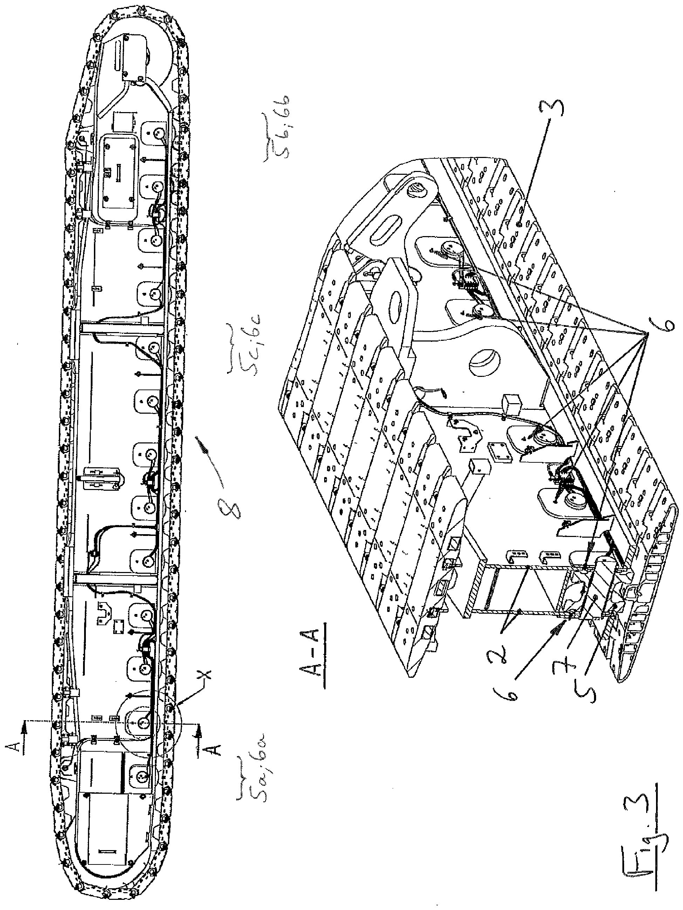

Aus der Figur 3 wird ferner deutlich, dass sich bei der gezeigten Ausführungsform oberhalb beider Enden der Laufradachse 7 jeweils ein Drucksensor 6 im Raupenträger 2 vorgesehen ist. In der oberen Darstellung der Figur 3 ist zu sehen, dass für sämtliche Laufräder 5 des Kettenlaufwerks 8 Sensoren 6 oberhalb der jeweiligen Laufradachsen 7 vorgesehen sind. Das direkt an das Leitrad 1 anschließende Laufrad und ein diesem Laufrad zugeordneter Sensor sind mit den Bezugszeichen 5a bzw. 6a bezeichnet, während das an das Triebrad 4 direkt anschließende Laufrad und der diesem Laufrad zugeordnete Sensor mit 5b bzw. 6b bezeichnet sind. Ein beliebiges, zwischen den äußeren Laufrädern 5a und 5b angeordnetes Laufrad und der diesem Laufrad zugeordnete Sensor sind mit 5c bzw. 6c bezeichnet. Während mit den Bezugszeichen 5 und 6 beliebige Laufräder bzw. Sensoren benannt werden, beziehen sich die Bezugszeichen 5a und 6a stets auf das direkt an das Leitrad 1 anschließende äußerste Laufrad bzw. den dazugehörigen Sensor, während die Bezugszeichen 5b und 6b das direkt an das Triebrad 4 anschließende Laufrad bzw. den dazugehörigen Sensor benennen. Für ein beliebiges, zwischen den beiden äußeren Laufrädern 5a und 5b angeordnetes Laufrad und einen dazugehörigen Sensoren wurden die Bezugszeichen 5c und 6c vergeben.

Es wird deutlich, dass die über die einzelnen Laufräder 5 in die Raupenkette 3 eingeleiteten Kräfte oberhalb der jeweiligen Laufradachsen 7 eine Druckbelastung des Raupenträgers 2 bewirken. Die oberhalb der jeweiligen Laufradachsen 7 angeordneten Drucksensoren 6 liefern daher für jedes Laufrad 5 voneinander unabhängige Messwerte, welche direkt auf die mittels der jeweiligen Laufräder 5 in die Raupenkette 3 eingeleiteten Kräfte schließen lassen. Da im gezeigten Ausführungsbeispiel jedes Laufrad 5 eine eigene Messsensoren 6 aufweist, lässt sich nicht nur der gesamte, über das Kettenlaufwerk 8 auf den darunterliegenden Boden ausgeübte Druck berechnen, sondern insbesondere auch der Verlauf des Bodendrucks über das Kettenlaufwerk 8, wenn die einzelnen Laufräder 5 unterschiedlich stark belastet werden.

## Patentansprüche

1. Kettenlaufwerk für eine Arbeitsmaschine, insbesondere für einen Raupenkran oder einen Raupenbagger, mit einem Raupenträger (2), einer Raupenkette (3), einem Trieb- (4) und einem Leitrad (1), und einer Anordnung von mit dem Raupenträger (2) gekoppelten Laufrädern (5), **dadurch gekennzeichnet, dass** das Kettenlaufwerk eine Messsensorik aufweist, welche für die äußeren Laufräder (5a, 5b) der Laufradanordnung, welche sich an das Triebrad (4) und das Leitrad (1) anschließen, und für zumindest ein weiteres, zwischen den äußeren Laufrädern (5a, 5b) angeordnetes Laufrad (5c), jeweils einen zur Bestimmung der Druckbelastung des Raupenträgers (2) ausgestalteten Drucksensor (6a, 6b, 6c) in einem von dem zumindest einen weiteren Laufrad (5c) druckbelasteten Bauteil des Kettenlaufwerks (8) umfasst, wobei der Drucksensor (6a, 6b, 6c) oberhalb der jeweiligen Laufrad-Achse (7) in den Laufwerkskasten des Raupenträgers (2) integriert ist und mittels dem die über das jeweilige Laufrad (5a, 5b, 5c) in die Raupenkette (3) eingeleitete Kraft bestimmt werden kann.

2. Kettenlaufwerk nach Anspruch 1, wobei für alle Laufräder (5) der Laufradanordnung Sensoren (6) vorgesehen sind.

3. Kettenlaufwerk nach Anspruch 1 oder 2, wobei für jedes Laufrad (5) ein eigener Sensor (6) vorgesehen ist.

4. Kettenlaufwerk nach einem der Ansprüche 1 bis 3, wobei der zumindest eine Drucksensor oberhalb anliegend an die jeweilige Laufrad-Achse (7) in den Laufwerkskasten des Raupenträgers (2) integriert ist.

5. Kettenlaufwerk nach Anspruch 4, wobei zu beiden Seiten der Laufrad-Achse (7) ein Drucksensor (6) im Laufwerkskasten integriert ist.

6. Verfahren zur Bestimmung der Bodendruckverteilung unterhalb einer Arbeitsmaschine, insbesondere eines Raupenkrans oder Raupenbaggers, die zumindest ein Kettenlaufwerk (8) mit einem Raupenträger (2), einer Raupenkette (3), einem Trieb- (4) und einem Leitrad (1), und einer Anordnung von mit dem Raupenträger (2) gekoppelten Laufrädern (5) aufweist, wobei das Kettenlaufwerk eine Messsensorik aufweist, welche für die äußeren Laufräder (5a, 5b) der Laufradanordnung, welche sich an das Triebrad (4) und das Leitrad (1) anschließen, und für zumindest ein weiteres, zwischen den äußeren Laufrädern (5a, 5b) angeordnetes Laufrad (5c), jeweils einen zur Bestimmung der Druckbelastung des Raupenträgers (2) ausgestalteten Drucksensor (6a, 6b, 6c) in einem von dem zumindest einen weiteren Laufrad (5c) druckbelasteten Bauteil des Kettenlaufwerks (8) umfasst, wobei der Drucksensor (6a, 6b, 6c) oberhalb der jeweiligen Laufrad-Achse (7) in den Laufwerkskasten des Raupenträgers (2) integriert ist, mit den Schritten:
- Bestimmen der in die Raupenkette (3) eingeleiteten Kräfte für die Laufräder (5a, 5b, 5c) mittels der jeweiligen Sensoren (6a, 6b, 6c);
- Bestimmen der Bodendruckverteilung über die Laufradanordnung zumindest eines Kettenlaufwerks (8) der Arbeitsmaschine hinweg, basierend auf den ermittelten Kräften.

7. Verfahren nach Anspruch 6, umfassend folgenden Schritt:
- Unterdrücken von Kranfunktionen, die ein Überschreiten einer zulässigen Bodendruckverteilung bewirken würden.

8. Arbeitsmaschine, insbesondere Raupenkran oder Raupenbagger, mit zumindest einem Kettenlaufwerk nach einem der Ansprüche 1 bis 5 und/oder einer Arbeitsmaschinensteuerung die ein Verfahren nach einem der Ansprüche 6 oder 7 ausführt.

## Claims

1. Tracked drive assembly for a work machine, in particular for a crawler crane or crawler excavator, comprising a crawler frame (2), a crawler track (3), a drive wheel (4) and a guide wheel (1), and an arrangement of running wheels (5) coupled to the crawler frame (2), **characterized in that** the tracked drive assembly has a sensor system comprising, for each of the outer running wheels (5a, 5b) of the running wheel arrangement, which are connected to the drive wheel (4) and the guide wheel (1), and for at least one other running wheel (5c) arranged between the outer running wheels (5a, 5b), a pressure sensor (6a, 6b, 6c) in a component of the tracked drive assembly (8) which is exposed to the compressive load of the at least one other running wheel (5c), said pressure sensor (6a, 6b, 6c) being configured to determine the compressive load the crawler frame (2) is exposed to, wherein said pressure sensor (6a, 6b, 6c) is integrated into the drive assembly box of the crawler frame (2) above the respective running wheel axle (7) and by means of which the force introduced into the crawler track (3) via the respective running wheel (5a, 5b, 5c) can be determined.

2. Tracked drive assembly according to Claim 1, wherein sensors (6) are provided for all running wheels (5) of the running wheel arrangement.

3. Tracked drive assembly according to Claim 1 or 2, wherein a proprietary sensor (6) is provided for each running wheel (5).

4. Tracked drive assembly according to any one of Claims 1 to 3, wherein the at least one pressure sensor is integrated into the drive assembly box of the crawler frame (2) in such a way as to abut the upper side of the respective running wheel axle (7).

5. Tracked drive assembly according to Claim 4, wherein a pressure sensor (6) is integrated, on both sides of the running wheel axle (7), in the drive assembly box.

6. Method for determining the ground pressure distribution below a work machine, in particular a crawler crane or crawler excavator, having at least one tracked drive assembly (8) comprising a crawler frame (2), a crawler track (3), a drive wheel (4) and a guide wheel (1), and an arrangement of running wheels (5) coupled to the crawler frame (2), wherein the tracked drive assembly has a sensor system comprising a pressure sensor (6a, 6b, 6c) for each of the outer running wheels (5a, 5b) of the running wheel arrangement, which are connected to the drive wheel (4) and the guide wheel (1), and for at least one other running wheel (5c) arranged between the outer running wheels (5a, 5b), said pressure sensor (6a, 6b, 6c) being arranged in a component of the tracked drive assembly (8) which is exposed to the compressive load of the at least one other running wheel (5c), said pressure sensor (6a, 6b, 6c) being configured to determine the compressive load the crawler frame (2) is exposed to, wherein said pressure sensor (6a, 6b, 6c) is integrated into the drive assembly box of the crawler frame (2) above the respective running wheel axle (7), the method comprising the steps of:
- determining the forces introduced into the crawler track (3), for the running wheels (5a, 5b), by means of the respective sensors (6a, 6b, 6c); and
- determining the ground pressure distribution across the running wheel arrangement for at least one tracked drive assembly (8) of the work machine from the forces determined.

7. Method according to Claim 6, comprising the following step:
- suppressing crane functions which would cause a permissible ground pressure distribution to be exceeded.

8. Work machine, in particular crawler crane or crawler excavator, comprising at least one tracked drive assembly according to any one of Claims 1 to 5 and/or a work machine controller which performs a method according to one of Claims 6 or 7.

## Revendications

1. Entraînement à chenilles destiné à une machine de travail, notamment à une grue à chenilles ou à une excavatrice à chenilles, avec un support de chenille (2), une chenille (3), une roue motrice (4) et une roue directrice (1), et un ensemble de roues (5) couplées avec le support de chenille (2), **caractérisé en ce que** l'entraînement à chenilles présente un ensemble de capteurs de mesure, lequel comprend, pour les roues extérieures (5a, 5b) de l'ensemble de roues, lesquelles sont reliées à la roue motrice (4) et à la roue directrice (1), et pour au moins une autre roue (5c) disposée entre les roues extérieures (5a, 5b), respectivement, un capteur de pression (6a, 6b, 6c) conçu pour la détermination de la charge de compression du support de chenille (2) dans un composant de l'entraînement à chenilles (8) sollicité en compression par une parmi l'au moins une autre roue (5c), où le capteur de pression (6a, 6b, 6c) est intégré dans le carter du dispositif d'entraînement du support de chenille (2) au-dessus de l'axe de roue (7) respectif, et au moyen duquel la force appliquée sur la chenille (3) par la roue respective (5a, 5b, 5c) peut être déterminée.

2. Entraînement à chenilles selon la revendication 1, dans lequel des capteurs (6) sont prévus pour toutes les roues (5) de l'ensemble de roues.

3. Entraînement à chenilles selon la revendication 1 ou 2, dans lequel un propre capteur (6) est prévu pour chaque roue (5).

4. Entraînement à chenilles selon l'une des revendications 1 à 3, dans lequel l'au moins un capteur de pression est intégré de manière adjacente à l'axe de roue (7) respectif dans le carter du dispositif d'entraînement du support de chenille (2).

5. Entraînement à chenilles selon la revendication 4, dans lequel un capteur de pression (6) est intégré dans le boîtier de dispositif d'entraînement sur les deux côtés de l'axe de roue (7).

6. Procédé de détermination d'une répartition de la pression au sol en dessous d'une machine de travail, notamment d'une grue à chenilles ou d'une excavatrice à chenilles, qui présente au moins un entraînement à chenilles (8) avec un support de chenille (2), une chenille (3), une roue motrice (4) et une roue directrice (1), et un ensemble de roues (5) couplées avec le support de chenille (2), où l'entraînement à chenilles présente un ensemble de capteurs de mesure, lequel comprend, pour les roues extérieures (5a, 5b) de l'ensemble de roues, lesquelles sont reliées à la roue motrice (4) et à la roue directrice (1), et pour au moins une autre roue (5c) disposée entre les roues extérieures (5a, 5b), respectivement, un capteur de pression (6a, 6b, 6c) conçu pour la détermination de la charge de compression du support de chenille (2) dans un composant de l'entraînement à chenilles (8) sollicité en compression par une parmi l'au moins une autre roue (5c), où le capteur de pression (6a, 6b, 6c) est intégré dans le carter du dispositif d'entraînement du support de chenille (2) au-dessus de l'axe de roue (7) respectif, avec les étapes :
- de détermination des forces appliquées sur les roues (5a, 5b, 5c) dans la chenille (3) au moyen des capteurs (6a, 6b, 6c) respectifs ;
- de détermination de la répartition de la pression au sol sur l'ensemble de roues d'au moins un entraînement à chenille (8) de la machine de travail en se basant sur les forces déterminées.

7. Procédé selon la revendication 6, comprenant l'étape suivante :
- de suppression de fonctions de la grue qui provoqueraient un dépassement d'une répartition de pression au sol admissible.

8. Machine de travail, notamment grue à chenilles ou excavatrice à chenilles avec au moins un entraînement à chenilles selon l'une des revendications 1 à 5 et/ou commande de machine de travail qui exécute un procédé selon l'une des revendications 6 ou 7.
